# EUROPÄISCHE PATENTSCHRIFT

(11) **EP 2 435 308 B1**
(45) Veröffentlichungstag und Bekanntmachung des Hinweises auf die Patenterteilung: **23.11.2016**
(21) Anmeldenummer: 10722624.3
(22) Anmeldetag: 26.05.2010
(51) Int. Cl.: B64D 45/00, B64C 13/50

(54) **FLUGZEUG MIT EINEM HOCHAUFTRIEBSSYSTEM**
AIRCRAFT WITH A HIGH-LIFT SYSTEM
AÉRONEF MUNI D'UN SYSTÈME HYPERSUSTENTATEUR

(30) Priorität: 26.05.2009 US 180962 P; 26.05.2009 DE 102009022602
(43) Veröffentlichungstag der Anmeldung: 04.04.2012
(73) Patentinhaber: Airbus Operations GmbH, 21129 Hamburg (DE)
(72) Erfinder: RICHTER, Martin, 28717 Bremen (DE); LÜCKEN, Peter, 28357 Bremen (DE)
(74) Vertreter: Bird & Bird LLP
(86) Internationale Anmeldenummer: PCT/EP2010/003196
(87) Internationale Veröffentlichungsnummer: WO 2010/136188

(56) Entgegenhaltungen:
- EP-A1- 1 462 361
- US-A1- 2006 043 242
- US-A1- 2008 142 642

## Beschreibung

Die Erfindung betrifft ein Flugzeug mit einem Hochauftriebssystem.

Aus der EP 1 462 361 A1 ist ein Hochauftriebssystem offenbart, bei dem äußere Hochauftriebsklappen gegenüber einer inneren Hochauftriebsklappe mittels eigenen Antriebsmotoren, die von einer Klappen-Ansteuerungsvorrichtung kommandiert werden, und einer separaten von den Antriebsmotoren angetriebenen Torsionswelle betätigt werden.

Aus dem allgemeinen Stand der Technik ist bekannt, Antriebe von verstellbaren Auftriebskörpern oder -klappen wie z.B. Landeklappen oder Slats oder Vorflügel von Hochauftriebssystemen moderner ziviler sowie auch militärischer Transportflugzeuge über zentrale, digitale Rechner anzusteuern und zu überwachen. Diese befinden sich zusammen mit anderen Computern, wie die Flugsteuerungs-Computer oder Wartungs-Computer in den Bordrechnerkabinetten in einer sogenannten Avionik-Bay, die in der Nähe des Flugzeugs-Cockpits angeordnet sind. Dadurch sind insbesondere die sicherheitskritischen Flugzeug-Computer in einem Raum untergebracht, einheitlich klimatisiert und elektrisch versorgt ist. Die Unterbringung der genannten Computer in ein und derselben Avionik-Bay oder in einem einzigen Unterbringungsraum hat den Vorteil, dass nur für den einzigen Unterbringungsraum einheitliche atmosphärische Bedingungen erzeugt werden müssen, die die technischen Voraussetzung für die Einhaltung z.B. der Fehlerrate dieser Computer schaffen.

Dementsprechend werden sämtliche Komponenten des Hochauftriebssystems außerhalb der Avionik-Bay über analoge Signalverbindungen mit dem Ansteuerungs-Computer desselben verbunden. So sind z.B. die Antriebsmotoren der Hochauftriebssysteme, die zur Verstellung der Landeklappen oder Vorderkantenklappen (Slats) vorgesehen sind, der Bedienhebel (Slats/Flaps Lever) sowie die Sensoren zur Komponenten- und Systemüberwachung funktional über analoge Signalverbindungen mit dem Ansteuerungs-Computer zur Ansteuerung der Landeklappen und Feststellbremsen verbunden. Auf diese Weise wird sichergestellt, dass die funktionalen Anforderungen an das Hochauftriebssystem und insbesondere an die Ansteuerungs-Computer desselben, erfüllt werden, da die Ansteuerungs- und Überwachungssignale zwischen der Eingabevorrichtung des Hochauftriebssystems, z.B. dem Bedienhebel, und dem Ansteuerungs-Computer des Hochauftriebssystems sowie zwischen dem Ansteuerungs-Computer und den Antriebsmotoren oder der Antriebsvorrichtung des Hochauftriebssystems unmittelbar und somit mit minimalem Zeitverzug übermittelt werden. Aufgrund der beschriebenen Verwendung von analogen Signalübertragungsleitungen ergeben sich insbesondere Vorteile in Bezug auf die Realisierung eines Sicherheitskonzepts, da dadurch die Verzugszeit oder die Totzeit zwischen Fehlereintritt sowie dessen Erkennung und entsprechende funktionale Reaktionen in der Ansteuerungsvorrichtung wie das Auslösen der Feststell- und Sicherheitsbremsen minimiert ist und somit die Rekonfiguration des Hochauftriebssystems im Fehlerfall in verhältnismäßig kurzer Zeit vorgenommen werden kann.

Aufgabe der Erfindung ist, ein Flugzeug mit einem Hochauftriebssystem bereitzustellen, mit dem eine Reduktion des Aufwands zur Integration desselben im Flugzeug erreicht werden kann.

Diese Aufgabe wird mit den Merkmalen des Patentanspruchs 1 gelöst. Weitere Ausführungsformen sind in den auf diesen rückbezogenen Unteransprüchen angegeben.

Erfindungsgemäß ist ein Flugzeug mit einem Hochauftriebssystem vorgesehen, aufweisend:
▪ ein Flugführungssystem mit einem Flugführungs-Computer, der z.B. in der Avionik-Bay des Flugzeugs eingebaut ist,
▪ zumindest einen Hochauftriebskörper, der an jeweils einem Tragflügel des Flugzeugs gegenüber diesem verstellbar angeordnet sind, eine mit den Hochauftriebskörpern gekoppelte Antriebsvorrichtung, die derart ausgeführt ist, dass diese die Hochauftriebskörper aufgrund von Ansteuerungskommandos zwischen einer eingefahrenen Stellung und einer ausgefahrenen Stellung verstellt, und
▪ zumindest ein Hochauftriebssystem-Computer oder eine Ansteuerungsvorrichtung, der bzw. die über eine analoge Datenverbindung mit der Antriebsvorrichtung verbunden ist und der bzw. die eine Ansteuerungsfunktion zur Erzeugung von Ansteuerungskommandos zur Einstellung des Verstellzustands der Hochauftriebskörper aufweist.

Die Ansteuerungsvorrichtung weist eine digitale Schnittstelle zur Verbindung derselben mit dem Flugführungs-Computer auf, um Flugzustands-bezogene Daten von diesem zu empfangen. Die Ansteuerungsvorrichtung weist eine Funktion auf, die unter Verwendung der Flugzustands-bezogenen Daten Ansteuerungskommandos zur Betätigung der jeweils zugeordneten Ansteuerungsvorrichtung, um die Hochauftriebskörper zu verstellen, sowie von Überwachungs- und Feststellkommandos zur Betätigung von Bremsen der jeweils zugeordneten Ansteuerungsvorrichtung zur Arretierung der Hochauftriebskörper im Systemfehlerfall zur Übermittlung an die Ansteuerungsvorrichtung erzeugt und an diese übermittelt. Der Systemfehlerfall kann z.B. der Ausfall einer Verstellmechanik z.B. durch den Bruch einer zentralen Übertragungswelle sein. Die Flugzustands-bezogenen Daten sind Daten, die mit Hilfe von Sensoren ermittelt werden und die sich auf den Flugzustand des Flugzeugs beziehen oder von diesem abgeleitet sind oder können Flugzustandsdaten, also den Flugzustand beschreibende Daten sein. An Flugzustands-bezogenen Daten werden insbesondere die aktuelle Flugzeugs-Geschwindigkeit, der Anstellwinkel des Flugzeugs, die Flughöhe verwendet.

Das erfindungsgemäß vorgesehene Flugzeug bzw. Hochauftriebssystem eines Flugzeugs weist weiterhin eine Eingabevorrichtung zur Eingabe von Soll-Kommandos zur Verstellung der Hochauftriebskörper auf, die mit der Ansteuerungsvorrichtung zur Übermittlung von Soll-Kommandos an die diese zur Verstellung der Hochauftriebskörper verbunden ist. Die Ansteuerungsvorrichtung weist eine Funktion auf, die unter Verwendung der von der Eingabevorrichtung empfangenen Soll-Kommandos sowie flugzustands-bezogener Daten zur Verstellung der Hochauftriebskörper Ansteuerungskommandos zur Übermittlung an die Ansteuerungsvorrichtung erzeugt und an diese übermittelt. Bei dem erfindungsgemäßen Hochauftriebssystem kann auch das Flugführungssystem eine insbesondere als Sicherheitsfunktion ausgebildete Funktion aufweisen, mit der die Ansteuerungsvorrichtung z.B. zum Einfahren von Hochauftriebskörpern betätigt wird.

Das erfindungsgemäß vorgesehene Flugzeug weist weiterhin Sensoren zum Erfassen eines Verstellzustands der Hochauftriebskörper, die über analoge Signalleitungen mit der Ansteuerungsvorrichtung zur Kontrolle oder Überwachung des Verstellzustands der Hochauftriebskörper und/oder der Funktionsfähigkeit des Hochauftriebssystems verbunden sind.

Nach der erfindungsgemäßen Lösung ist insbesondere vorgesehen,
▪ dass die Eingabevorrichtung über eine digitale Datenverbindung mit der Ansteuerungsvorrichtung zur Übermittlung von Soll-Kommandos zur Verstellung der Hochauftriebskörper verbunden ist und
▪ dass die Ansteuerungsvorrichtung im Nutzlastbereich des Flugzeugrumpfs eingebaut ist.

Nach einem Ausführungsbeispiel der Erfindung ist die Ansteuerungsvorrichtung des Hochauftriebssystems im Nutzlastbereich des Flugzeugrumpfs und in einem Bereich eingebaut, der sich in Längsrichtung des Rumpfes gesehen erstreckt von einer Stelle, die von der vorderen Seite des Flügelkastens aus gesehen einen Abstand von einem Drittel der sich von dort bis zur Flugzeugspitze erstreckenden Rumpflänge hat, bis zu einer Stelle, die von der hinteren Seite des Flügelkastens aus gesehen einen Abstand von einem Drittel der sich von dort bis zum Rumpfende am Heck des Flugzeugs erstreckenden Rumpflänge hat.

Nach einem erfindungsgemäßen Ausführungsbeispiel ist vorgesehen, dass das Hochauftriebssystem ein Vorderkanten-Auftriebssystem mit verstellbaren Vorderkanten-Auftriebskörpern und einer Ansteuerungsvorrichtung ist, wobei die Ansteuerungsvorrichtung des Vorderkanten-Auftriebssystems zu deren Verstellung funktional mit diesen verbunden ist.

Dabei kann insbesondere vorgesehen sein, dass die Ansteuerungsvorrichtung des Vorderkanten-Auftriebssystems im Nutzlastbereich des Flugzeugrumpfs und dabei in einem Bereich eingebaut ist, der sich in Längsrichtung des Rumpfes gesehen von der vorderen Seite des Flügelkastens bis zu einer Stelle erstreckt, die von der vorderen Seite des Flügelkastens aus einen Abstand von einem Drittel der sich von dort bis zur Spitze des Flugzeugs erstreckenden Rumpflänge hat.

Nach einem erfindungsgemäßen Ausführungsbeispiel ist vorgesehen, dass das Hochauftriebssystem ein Hinterkanten-Auftriebssystem mit verstellbaren Hinterkanten-Auftriebskörpern und einer Ansteuerungsvorrichtung ist, wobei die Ansteuerungsvorrichtung des Hinterkanten-Auftriebssystems zu deren Verstellung funktional mit diesen verbunden ist.

Dabei kann insbesondere vorgesehen sein, dass die Ansteuerungsvorrichtung des Hinterkanten-Auftriebssystems im Nutzlastbereich des Flugzeugrumpfs und dabei in einem Bereich eingebaut ist, der sich in Längsrichtung des Rumpfes gesehen von der hinteren Seite des Flügelkastens bis zu einer Stelle erstreckt, die von der hinteren Seite des Flügelkastens einen Abstand von einem Drittel der sich von dort bis zum Heck erstreckenden Rumpflänge hat.

Die erfindungsgemäße Lösung sieht vor, die übliche Anordnung von Flugsteuerungs-Computern zusammen mit Hochauftriebssystem-Computern zu verändern, obwohl die bestehenden Sicherheitsanforderungen an das Flugzeug und die damit verbundenen Zulassungsprozeduren von einer zentralen Anordnung dieser Computer ausgehen. Mit der Unterbringung der Hochauftriebssystem-Computer oder der Ansteuerungsvorrichtung im Nutzlastbereich des Flugzeugrumpfs entfällt gegenüber der üblichen Anordnung der Rechner ein Großteil der Kabellängen für analoge Steuerungs- und Überwachungssignale zur Überbrückung der Distanz zwischen Cockpit (bzw. Avionik-Bay) und Flügel.

Durch die erfindungsgemäß vorgesehene Anbindung der Eingabevorrichtung über eine digitale Datenverbindung an die Ansteuerungsvorrichtung des Hochauftriebssystems zur Übermittlung von Soll-Kommandos zur Verstellung der Hochauftriebskörper wird zwar der Schnittstellen-Aufwand an der Eingabevorrichtung zur Umwandlung von den Stellbewegungen entsprechenden Sensorsignalen in digitale Daten erhöht und die funktionale Leistung insbesondere hinsichtlich der Übertragungsgeschwindigkeit oder Übertragungszeitraum der Verbindung zwischen der Eingabevorrichtung und der Ansteuerungsvorrichtung verringert, da diese digitalen Eingabedaten über den Flugzeug-Datenübertragungsbus im Rahmen eines vorgegebenen Übertragungsprotokolls übermittelt werden. Aber auch durch diese Maßnahme werden analoge Kabel zur analogen Signalübertragung von der Eingabevorrichtung zur Ansteuerungsvorrichtung eingespart. Hinsichtlich der Datenübertragung sind erfindungsgemäß dabei für die Einspeisung der Eingabedaten von der Eingabevorrichtung in den Datenbus Zeitfenster und Iterationsraten vorgesehen, die einen noch zulässigen Zeitverzug bewirken. Hierbei ist die Übertragung der Daten von der Eingabevorrichtung zu harmonieren mit der Übertragung der weiteren über den Datenbus zu übertragenden Daten unter Beachtung der jeweiligen zeitlichen Bedingungen.

Erfindungsgemäß kann insbesondere die zumindest eine Ansteuerungsvorrichtung des Hochauftriebssystems jeweils aus Computern und Hardware-Schnittstellen gebildet sein, die in ihrer Hardware zueinander kompatibel und insbesondere identisch ausgeführt sind, um eine Austauschbarkeit von Computern mit Hardware-Schnittstellen zwischen Ansteuerungsvorrichtungen und/oder innerhalb von Ansteuerungsvorrichtungen zu gewährleisten. Bei den Hardware-Schnittstellen sind insbesondere die elektrischen Steckplätze oder die Signalverbindungs-Steckplätze zueinander kompatibel oder identisch ausgeführt, so dass gleiche Steckertypen zum Anschluss der jeweils vorgesehenen Signal- und/oder Datenverbindungen eingesteckt werden können. Die Hardware-Schnittstellen sind dabei insbesondere zur Herstellung der Datenverbindungen zu Flugsteuerungs-Computer und/oder zu der jeweils zugeordneten Antriebsvorrichtung zueinander kompatibel oder identisch ausgebildet. Erfindungsgemäß ist insbesondere ein Flugzeug mit erfindungsgemäßen Merkmalen vorgesehen, das einen Heckantrieb aufweist, da dabei die Einsparung von Kabellängen weiter verbessert werden kann, da die Tragflächen aufgrund der Hecklastigkeit durch die Anordnung von Triebwerken am Rumpfende verhältnismäßig weit hinten am Rumpf angeordnet sind.

Die Erfindung basiert einerseits auf der Idee, dass die Ansteuerungsvorrichtung des Hochauftriebssystems, also die Steuerungs- und Überwachungsrechner oder Kontrollrechner möglichst nahe an die Mehrzahl der zu steuernden und zu überwachenden Komponenten des Hochauftriebssystems, also des an der Flügelvorderkante befindlichen Vorderkanten-Auftriebssystem oder Slatsystems und/oder an die Systemkomponenten des an der Flügelhinterkante befindlichen Hinterkanten-Auftriebssystem oder Flapsystems zu positionieren. Andererseits sind die Umwelt- und Installationsbedingungen für die jeweilige Ansteuerungsvorrichtung hinsichtlich der Zuverlässigkeit und Zugänglichkeit den im klassischen Bordrechnerkabinett oder der Avionik-Bay herrschenden Umwelt- und Installationsbedingungen ähnlich. Weiterhin ist mit der erfindungsgemäßen Lösung die geforderte Ausfallsicherheit des Hochauftriebssystems ohne im Vergleich zu den aus dem Stand der Technik bekannten Anordnung zusätzlichen Aufwand erreichbar, bei denen die Hochauftriebs-Computer im Bordrechner-Kabinett in der Cockpit-Nähe angeordnet sind.

Die Anordnung der Ansteuerungsvorrichtung im Flugzeug kann demgemäß auch als dezentral bezeichnet werden. In Bezug auf das Hochauftriebssystem selbst kann die Anordnung der Ansteuerungsvorrichtung, insbesondere funktional gesehen, als zentrale Struktur aufgefasst werden, die speziell bei Antriebssystemen mit zentralem Antrieb, einem durchgehenden Drehwellenstrang und lokalen mechanischen Stelleinrichtungen an den Support Stationen (Tracks) Vorteile hinsichtlich vollständiger und schneller Systemüberwachung bieten. Diese zentralen Antriebssysteme zeichnen sich durch hohe Systemdynamik bei Fehlerfällen (z.B. Drehwellenbruch) aus und benötigen eine schnelle Fehlererkennung und Korrekturreaktion und mithin schnelle Signalübertragung und hohe Abtastraten der Kontrollalgorithmen innerhalb der Kontrollrechner.

Nach einem weiteren Ausführungsbeispiel ist die zumindest eine Ansteuerungsvorrichtung des Hochauftriebssystems in einem Bereich des Flugzeugrumpfs gelegen, der sich in der Flugzeugs-Längsrichtung gesehen von einem vorderen Punkt, der eine Flügelanschluss-Länge vor dem vordersten Punkt des Flügelanschlussbereichs oder des Flügelkastens gelegen ist, zu einem hinteren Punkt des Flügelanschluss-Bereichs erstreckt, der eine Flügelanschluss-Länge hinter dem hintersten Punkt des Flügelanschlussbereichs gelegen ist. Hierbei wird unter "Flügelanschluss-Länge" diejenige Länge verstanden, über die sich der Flügelanschlussbereich, d.h. der Verschneidungsbereich von Flügelprofil-Außenhaut und Rumpf-Außenhaut in der Längsrichtung des Rumpfes erstreckt.

Nach einem Ausführungsbeispiel der Erfindung ist das Hochauftriebssystem ein Vorderkanten-Auftriebssystem mit verstellbaren Vorderkanten-Auftriebskörpern, wobei die Ansteuerungsvorrichtung zu deren Verstellung funktional mit diesen verbunden ist. Dabei kann insbesondere die Ansteuerungsvorrichtung des Vorderkanten-Auftriebssystems in der Flugzeugs-Längsrichtung gesehen vor dem Flügelanschlussbereich gelegen sein.

Nach einem Ausführungsbeispiel der Erfindung weist das Hochauftriebssystem alternativ oder zusätzlich ein Hinterkanten-Auftriebssystem mit verstellbaren Hinterkanten-Auftriebskörpern auf, wobei die Ansteuerungsvorrichtung zu deren Verstellung funktional mit diesen verbunden ist. Dabei kann insbesondere die Ansteuerungsvorrichtung des Hinterkanten-Auftriebssystems in der Flugzeugs-Längsrichtung gesehen hinter dem Flügelanschlussbereich gelegen sein.

Bei einem Ausführungsbeispiel wird die Ansteuerungsvorrichtung für das Vorderkanten-Auftriebssystem mit zwei Kontrollrechnern in den Rumpfbereich kurz vor dem Flügelkasten und die Ansteuerungsvorrichtung für das Hinterkanten-Auftriebssystem mit zwei Kontrollrechnern kurz hinter dem Flügelkasten, ebenfalls im Rumpfbreich, installiert. Durch diese Anordnung verkürzen sich die Wege zwischen den Kontrollrechnern und den elektrischen Komponenten der jeweiligen Antriebsvorrichtung wie Antriebsmotoren, Feststellbremsen sowie Positions- und Fehlererkennungssensoren. Die Schnittstellen für die Ansteuerung und Überwachung des Vorderkanten-Auftriebssystems und/oder Hinterkanten-Auftriebssystems sind analog ausgeführt, so dass für die elektrischen Komponenten des jeweiligen Antriebssystems keine analog/digitale- bzw. digital/analoge Umwandlung erforderlich ist. Dementsprechend benötigen die elektrischen Komponenten des jeweiligen Antriebssystems keine elektronischen, integrierten Bausteine, Prozessoren oder ähnliches.

Da erfindungsgemäß die Eingabevorrichtung oder der Bedienhebel für die Soll-Vorgaben an das Vorderkanten-Auftriebssystem und/oder das Hinterkanten-Auftriebssystem über eine digitale Datenverbindung mit der Ansteuerungsvorrichtung zur Übermittlung von Soll-Kommandos zur Verstellung der Hochauftriebskörper verbunden ist, werden die jeweils unterschiedlichen Positionssignale der Eingabevorrichtung oder des Bedienhebels wie z.B. "0", "1", "2", ..., oder "Full" mittels analog/digitaler Schnittstelle digitalisiert und über Digitalleitungen als digitale Information an die Kontrollrechner des Vorderkanten-Auftriebssystems und/oder das Hinterkanten-Auftriebssystems geschickt. Diese analog/digitale Umwandlung kann sowohl in der Eingabevorrichtung oder im Bedienhebel erfolgen oder alternativ dazu außerhalb, also auf dem Signalweg zwischen der Eingabevorrichtung oder dem Bedienhebel und dem Flugzeug-Datenbus oder insbesondere der digitalen Sammel-und Verteilstelle (Switch) desselben mittels einer separaten elektronischen Einheit. Insbesondere ist weiterhin vorgesehen, die Signale von und zu anderen Systemen in rein digitaler Form über das gleiche digitale Netzwerk mit den Kontrollrechnern des Vorderkanten-Auftriebssystems und/oder das Hinterkanten-Auftriebssystems auszutauschen.

Auf diese Weise werden erfindungsgemäß die Daten oder die Signale von und zu dem Cockpit bzw. der näheren Cockpit-Umgebung nach ihrer Digitalisierung digital an die jeweilige Ansteuerungsvorrichtung des Hochauftriebssystems übertragen. Dementsprechend wird die relative lange Distanz zwischen Cockpitbereich und Flügel mittels einem digitalen Datenbus überbrückt, während die eigentliche Kontrolle und Überwachung der jeweiligen mechanischen Verstellvorrichtung des Hochauftriebssystems weiterhin mittels analoger Schnittstellen und analoger Signale ausgeführt wird.

Ein Vorteil der Erfindung liegt darin, dass sich durch die Verlagerung der Ansteuerungsvorrichtung, also der Kontrollrechner des Hochauftriebssystems, von der Avionik-Bay im vorderen Bereich des Flugzeugs zu einem Bereich, der nahe an der Mehrzahl von mit der Ansteuerungsvorrichtung anzusteuernden und zu überwachenden Systemkomponenten liegt, die Menge und das Gewicht der Kabel zur Übertragung der Analogsignale (Spannungen, Ströme) zwischen der Ansteuerungsvorrichtung und den entsprechenden Komponenten des Hochauftriebssystems, also des Landeklappensystems und/oder des Flügelvorderkantenkörper-Systems signifikant reduzieren. Dieses erfindungsgemäßes Lösungsmerkmal ist insbesondere bei Flugzeugen vorteilhaft, deren Triebwerke am Rumpfende angeordnet sind, da bei diesen Flugzeugen wegen der in der Längsrichtung des Rumpfs gesehen hinten angeordneten Triebwerken die Tragflächen aufgrund der sich dadurch ergebenden Hecklastigkeit des Flugzeugs in der Längserstreckung desselben verhältnismäßig weit hinten angeordnet sind.

Bei der erfindungsgemäßen Lösung werden Daten, die in Funktionen in der jeweiligen Ansteuerungsvorrichtung des Hochauftriebssystems verarbeitet werden, für die eine geringere Verarbeitungsgeschwindigkeit mit niedriger Abtastrate ausreichend ist als für die Signale zur Kommandierung der jeweiligen Antriebsvorrichtung des Hochauftriebssystems, über eine digitale Datenverbindung oder einen digitalen Bus an die Ansteuerungsvorrichtung übermittelt. Zu diesen über eine digitale Datenverbindung übermittelten Daten gehören die von der Eingabevorrichtung durch deren Betätigung erzeugten Soll-Kommandos zur Verstellung der Hochauftriebskörper. Optional gehören zu diesen Daten auch Daten, die von weiteren Flugzeugsystemen empfangen werden oder an diese übermittelt werden. Diejenigen Informationen oder Signalwerte, zu deren Verarbeitung in der Ansteuerungsvorrichtung eine hohe Verarbeitungsgeschwindigkeit mit hoher Abtastrate benötigt wird, werden über eine analoge Datenverbindung an die jeweilige Antriebsvorrichtung des Hochauftriebssystems übermittelt.

Durch die Ankopplung der Eingabevorrichtung und z.B. eines Stellhebels über eine digitale Datenverbindung an die Ansteuerungsvorrichtung ist zwar an der Ansteuerungsvorrichtung eine analog/digitale Signalumwandlung notwendig sowie eine weitere digitale Datenverbindungs-Schnittstelle vorzusehen. Demgegenüber können die erfindungsgemäß erreichten Vorteile durch Einsparung von Kabellängen der analogen Signalleitungen zwischen der Eingabevorrichtung und der Ansteuerungsvorrichtung zusammen mit der Einsparung von Kabellängen der analogen Signalleitungen bei der funktionalen Verbindung der Ansteuerungsvorrichtung mit den Komponenten oder Sensoren zum Erfassen eines Verstellzustands der Hochauftriebskörper insgesamt zu einer Systemverbesserung führen. Neben der Reduktion von Kabellängen der Analogleitungen wird aber auch die Anzahl von Analogverbindungen des Hochauftriebssystems nach der Erfindung reduziert. Dadurch kann der Integrationsaufwand des Hochauftriebssystems verbessert und durch die Verringerung der Kabellängen insbesondere Gewicht und sowie der Installationsaufwand in der Fertigung reduziert werden.

Das Ersetzen der analogen Datenübertragung des Flap Lever Signals (Sollposition für die Landeklappen) zu den Kontrollrechnern durch eine digitale Datenübertragung reduziert die Anzahl der Kabel für diese Schnittstelle prinzipiell. Können bei den digitalen Signalen (Flaps Lever Signal, Signale von und zu anderen Systemen) vielfach schon vorhandene digitale Netzwerke mitgenutzt werden, so kann auf spezielle Verkabelung für diese Komponenten zum Teil oder ganz verzichtet werden. Dies führt zu weiteren Einsparungseffekten hinsichtlich Flugzeugverkabelung und Kabelgewicht.

Erfindungsgemäß ist die zumindest eine Ansteuerungsvorrichtung in dem Frachtraum im Rumpf angeordnet, an dem klimatisierte Bedingungen herrschen, die sich zwar von den klimatisierten Bedingungen in der im vorderen Bereich des Rumpfs angeordneten Elektronik-Bay unterscheiden, die jedoch derart vorgesehen sind, dass bei diesen bei einer entsprechenden Ausführung der elektrischen und elektronischen Komponenten der zumindest einen Ansteuerungsvorrichtung diese die Anforderungen an Fehlerrate und Ausfallsicherheit erfüllen können.

Bei diesen erfindungsgemäß erreichbaren Vorteilen kann das erfindungsgemäß vorgesehene Hochauftriebssystem mit einem üblichen Antriebssystem verwendet werden, so dass dieses insbesondere mit einfachen, robusten Sensoren sowie einfachen, robusten elektrischen Schalt- oder Servoventilen ohne komplexe lokale Prozessoreinheiten ausgestattet sein kann. Bei den einfachen und robusten Sensoren bzw. einfachen, robusten elektrischen Schalt- und Servoventilen handelt es sich um Komponenten, die die an sie gestellten funktionalen und Sicherheits-Anforderungen auch an Einbauorten mit harschen, im Flügel bzw. Flügel-Vorderkanten oder Flügelhinterkante vorherrschen Umweltbedingungen erfüllen können, d.h. Einbauorten, die großen Schwankungen hinsichtlich Temperatur, Feuchtigkeit, Druck sowie elektromagnetischen Störungen ausgesetzt sind.

Nach einem Ausführungsbeispiel der Erfindung werden sowohl für das Vorderkanten-Auftriebssystem als auch für das Hinterkanten-Auftriebssystem die gleichen Sensoren zur Überwachung derselben verwendet und weisen die Ansteuerungsvorrichtung für das Vorderkanten-Auftriebssystem und die Ansteuerungsvorrichtung für das Hinterkanten-Auftriebssystem identische Schnittstellen für die Antriebsmotoren der Antriebsvorrichtung auf. Weiterhin ist bei diesem Ausführungsbeispiel vorgesehen, dass die elektrischen Steckplätze zur Aufnahme der Ansteuerungsvorrichtung des Vorderkanten-Auftriebssystems und die elektrischen Steckplätze zur Aufnahme der Ansteuerungsvorrichtung des Hinterkanten-Auftriebssystems derart gestaltet sind, dass diese jeweils kompatibel sowohl für die Aufnahme der Ansteuerungsvorrichtung des Vorderkanten-Auftriebssystems als auch für die Aufnahme der Ansteuerungsvorrichtung des Hinterkanten-Auftriebssystems sind. Unter "elektrische Steckplätze" ist in diesem Zusammenhang die Steckplatz-Anordnung, also insbesondere die Anordnung der elektrischen Steck-Kontakte zu verstehen.

Dadurch können dieselben Kontrollrechner- oder Kontrollcomputer-Typen oder Rechner-Bauarten jeweils für die Ansteuerungsvorrichtung sowohl des Vorderkanten-Auftriebssystems als auch des Hinterkanten-Auftriebssystems verwendet werden. Wenn in einem Ausführungsbeispiel der Erfindung zwei Computer für die Ansteuerungsvorrichtung des Vorderkanten-Auftriebssystems und auch zwei Computer für die Ansteuerungsvorrichtung des Hinterkanten-Auftriebssystems vorgesehen sind, können alle vier Kontrollrechner in ihrer Hardware und optional in ihren Schnittstellen identisch gebaut werden und insbesondere mit gleicher Gerätekennzeichnung versehen sein. Diese Maßnahme bringt den Vorteil mit sich, dass in diesem Ausführungsbeispiel eine Kontrollrechner-Bauart für vier identisch aufgeführte elektrische Steckplätze, also zwei Kontrollrechner für das Vorderkanten-Auftriebssystem und zwei Kontrollrechner für das Hinterkanten-Auftriebssystem jeweils derselben Bauart verwendet werden können. Dadurch können die Kosten für Beschaffung und Lagerhaltung der Rechner reduziert werden. Des Weiteren ergibt sich daraus eine höhere Flexibilität hinsichtlich der Verfügbarkeit von Geräten und insbesondere von Kontroll-Rechner für den Flugzeugbetreiber bei Ausfall eines Kontrollrechners oder sogar bei Ausfall beider Kontrollrechner des Vorderkanten-Auftriebssystems oder beider Kontrollrechner des Hinterkanten-Auftriebssystems.

Nach einem weiteren Ausführungsbeispiel sind die Kontrollrechner des Vorderkanten-Auftriebssystems austauschbar mit den Kontrollrechnern des Hinterkanten-Auftriebssystems gestaltet, so dass bei dem Ausfall beider Kontrollrechner des Vorderkanten-Auftriebssystems oder des Hinterkanten-Auftriebssystems einer dieser ausgefallenen Kontrollrechner durch einen der beiden noch intakten Kontrollrechner des jeweils anderen Auftriebssystems, also des Hinterkanten-Auftriebssystems bzw. des Vorderkanten-Auftriebssystems ersetzt werden kann. Dadurch kann die Systemverfügbarkeit durch einfachen Tausch der jeweiligen Kontrollrechner wieder hergestellt werden. Dies führt zu einer höheren Flexibilität des Flugzeugbetreibers bei einem Flugzeugbetrieb unter reduzierter Geräteverfügbarkeit.

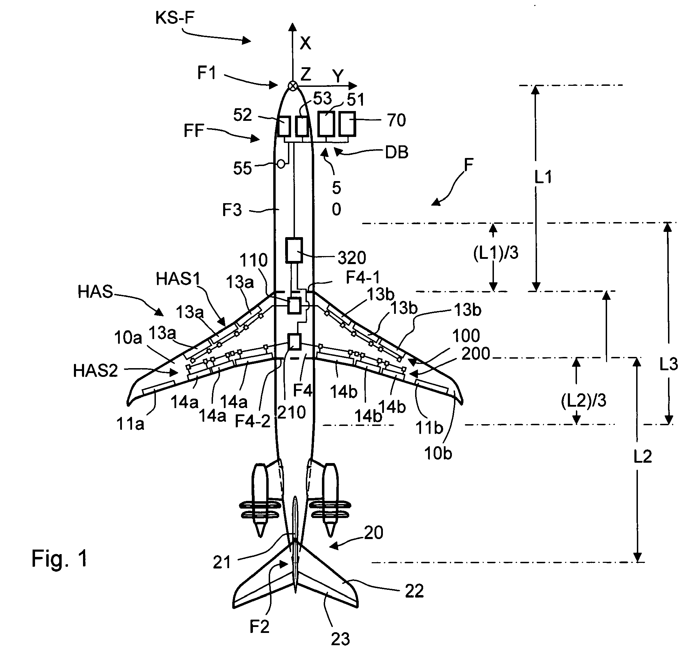

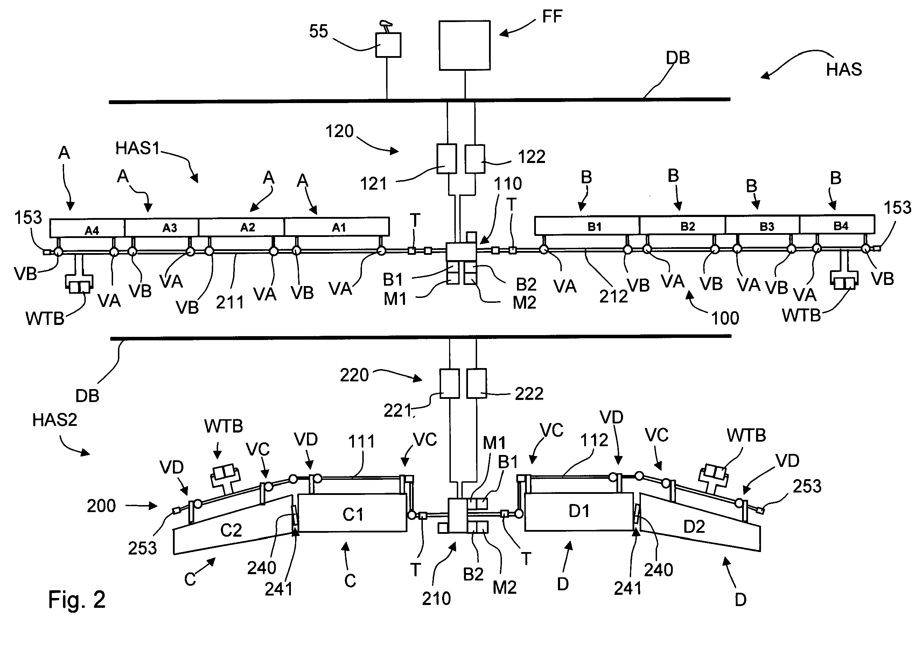

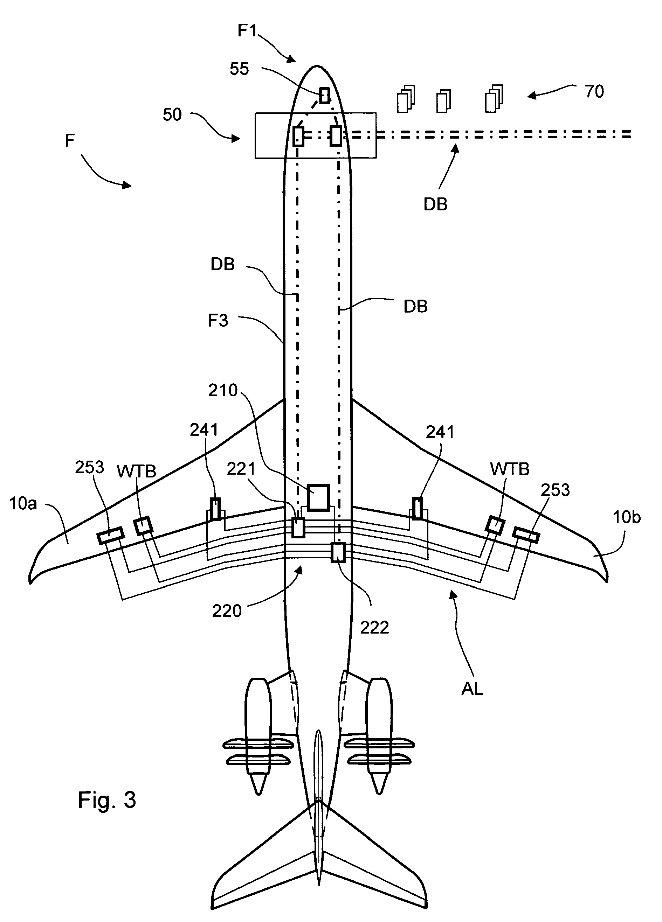

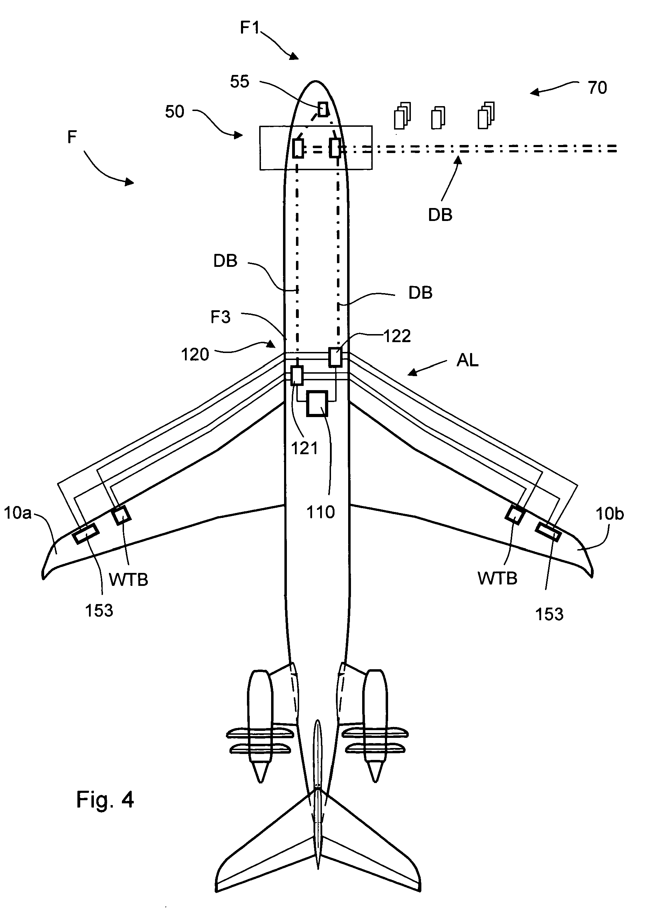

Im Folgenden werden Ausführungsbeispiele der Erfindung an Hand der beigefügten Figuren beschrieben, die zeigen:
▪ Figur 1 eine schematische Darstellung eines Flugzeugs mit einer funktionalen Darstellung einer Ausführungsform des erfindungsgemäß vorgesehenen Hochauftriebs-Systems, das ein Vorderkanten-Auftriebssystem und ein Hinterkanten-Auftriebssystem aufweist, sowie weiterer Flugzeug-Systeme, die an Bord des Flugzeugs eingerichtet sind;
▪ Figur 2 eine funktionale Darstellung eines weiteren Ausführungsbeispiels des erfindungsgemäß vorgesehenen Hochauftriebssystems zum Verstellen von Hochauftriebsklappen, das ein Vorderkanten-Auftriebssystem und ein Hinterkanten-Auftriebssystem mit jeweils einer Antriebsvorrichtung aufweist;
▪ Figur 3 eine schematische Darstellung von Signalübertragungsleitungen eines Ausführungsbeispiels des erfindungsgemäßen Flugzeugs mit einem Hinterkanten-Auftriebssystem;
▪ Figur 4 eine schematische Darstellung von Signalübertragungsleitungen eines Ausführungsbeispiels des erfindungsgemäßen Flugzeugs mit einem Vorderkanten-Auftriebssystem.

In das in der Figur 1 schematisch dargestellte Flugzeug F ist eine funktionale Darstellung eines Ausführungsbeispiels des erfindungsgemäß vorgesehenen Hochauftriebs-Systems HAS, das ein Vorderkanten-Auftriebssystem HAS1 und ein Hinterkanten-Auftriebssystem HAS2 aufweist, eingetragen. Nach der Erfindung kann das Flugzeug F ein Vorderkanten-Auftriebssystem HAS1 und/oder ein Hinterkanten-Auftriebssystem HAS2 aufweisen. Das Vorderkanten-Auftriebssystem HAS1 ist generell zum Verstellen zumindest eines Vorderkanten-Auftriebskörpers, der ein Slat oder ein Vorflügel oder eine Vorderkantenklappe sein kann, vorgesehen. Das Hinterkanten-Auftriebssystem HAS2 ist zum Verstellen zumindest eines Hinterkanten-Auftriebskörpers, der eine Landeklappe oder eine am Tragflügel drehbare Klappe sein kann, vorgesehen.

Die in den Figuren 1 bis 4 gezeigten funktionalen Darstellungen von Ausführungsformen des erfindungsgemäßen Hochauftriebs-Systems ist zum Verstellen zumindest einem Hinterkanten-Auftriebskörper oder einer Landeklappe und/oder einem Vorderkanten-Auftriebskörper oder einem Slat an jedem Tragflügel vorgesehen.

Das in der Figur 1 gezeigte Ausführungsbeispiel eines geregelten Flugzeugs F weist zwei Tragflügel 10a, 10b mit jeweils zumindest einem Querruder 11 a bzw. 11b auf. Das Flugzeug weist weiterhin an jedem Tragflügel 10a, 10b jeweils drei Vorderkanten-Auftriebskörper 13a, 13b und drei Hinterkanten-Auftriebskörper 14a, 14b auf. Optional können die Tragflügel 10a, 10b jeweils eine Mehrzahl von Spoilern aufweisen, die in der Figur 1 nicht dargestellt sind. In der Figur 1 ist ein auf das Flugzeug F bezogenes Koordinatensystem mit einer Flugzeug-Längsachse X, einer Flugzeug-Querachse Y und einer Flugzeug-Hochachse Z eingetragen.

Weiterhin weist das Flugzeug F ein Heckleitwerk 20 mit einem Seitenleitwerk 21 und einem Höhenleitwerk 22 mit jeweils zumindest einem Höhenruder 23 auf. Das Höhenleitwerk 22 kann z.B. als T-Leitwerk, wie es in der Figur 1 dargestellt ist, oder Kreuz-Leitwerk ausgebildet sein.

Das erfindungsgemäße Flugzeug F kann auch eine andere Form als das in der Figur 1 dargestellte Flugzeug F haben. Beispielsweise kann es sich bei dem erfindungsgemäßen Flugzeug auch um einen Hochdecker oder einen Nurflügler handeln. Auch kann das Flugzeug ein Flugzeug sein, das statt eines Höhenleitwerks Canards aufweist.

Die erfindungsgemäß vorgesehene Vorrichtung zur Beeinflussung der Richtungsstabilität des Flugzeugs F weist eine im Cockpit des Flugzeugs angeordnete Steuerungs-Eingabevorrichtung zur Eingabe von Steuerungsvorgaben zur Flugbahnsteuerung des Flugzeugs (nicht in den Figuren dargestellt), die insbesondere die Piloten-Eingabemittel wie einen Steuerknüppel und optional auch Pedale aufweisen kann, und eine mit der Steuerungs-Eingabevorrichtung funktional in Verbindung stehende Flugsteuerungsvorrichtung 50 mit einem Flugsteuerungs-Computer 51 insbesondere zur Flugbahnsteuerung des Flugzeugs F.

Das Flugzeug F weist weiterhin eine mit der Flugsteuerungsvorrichtung 50 funktional in Verbindung stehende Sensorvorrichtung mit Luftdaten-Sensorvorrichtung 52 zur Erfassung von Flugzustandsdaten zur Ermittlung des Flugzustands sowie Inertialsensor-Vorrichtung 53 zur Erfassung eines Flugzustands des Flugzeugs F und insbesondere der Drehraten des Flugzeugs F auf, die zum Flugführungssystem FF des Flugzeugs F gehören. Die Funktionsmodule oder Computer des FF und insbesondere die Sensorvorrichtungen können zur Gewährleistung einer geforderten Ausfallsicherheit mehrfach redundant realisiert sein. Die Luftdaten-Sensorvorrichtung 52 weist Luftdaten-Sensoren zur Ermittlung des Flugzustands des Flugzeugs F und insbesondere des dynamischen Drucks, des statischen Drucks und der Temperatur der das Flugzeug F umströmenden Luft auf. Mit der Inertialsensor-Vorrichtung 53 werden insbesondere Drehraten des Flugzeugs F einschließlich der Gierraten und der Rollraten des Flugzeugs zur Bestimmung der Fluglage desselben ermittelt. Die Flugsteuerungsvorrichtung 50 weist eine Empfangsvorrichtung zum Empfang der von der Sensorvorrichtung erfassten Sensorwerte auf, die von dieser an die Flugsteuerungsvorrichtung 50 übermittelt werden.

Den am Flugzeug jeweils vorhandenen Steuerklappen, wie z.B. den Querrudern 11a, 11 b, den Spoilern 12a bzw. 12b, ist zumindest ein Stellantrieb und/oder eine Antriebsvorrichtung zugeordnet, die jeweils von der Flugsteuerungsvorrichtung 50 mittels Kommandosignalen, die Soll-Kommandos sind, angesteuert wird, um die jeweils zugeordneten Steuerklappen zur Steuerung des Flugzeugs F zu verstellen. Dabei kann vorgesehen sein, dass einer dieser Steuerklappen durch jeweils einen Stellantrieb oder zur Erhöhung der Ausfallsicherheit des Flugzeugssystems einer Mehrzahl von Stellantrieben zugeordnet ist.

Die Flugsteuerungsvorrichtung 50 weist eine Steuerungsfunktion auf, die von der Steuerungs-Eingabevorrichtung Steuerungskommandos und von der Sensorvorrichtung Sensorwerte und insbesondere von der Sensorvorrichtung erfassten Drehraten empfängt. Die Steuerungsfunktion ist derart ausgeführt, dass diese in Abhängigkeit der Steuerungskommandos und der erfassten und empfangenden Drehraten Stellkommandos für die Stellantriebe erzeugt und an diese übermittelt, so dass durch Betätigung der Stellantriebe eine Steuerung des Flugzeugs F gemäß der Steuerungskommandos erfolgt.

Die Flugsteuerungsvorrichtung 50 kann insbesondere über einen digitalen Datenbus DB mit der Luftdaten-Sensorvorrichtung 52 und der Inertialsensor-Vorrichtung 53 verbunden sein.

Über die Flugsteuerungsvorrichtung 50 und die Sensorvorrichtung hinaus können weitere Flugzeugsystem-Module über den Datenbus oder ein Datenbus-System DB miteinander verbunden sein, die in den Figuren symbolisch mit einem Funktionsblock 70 dargestellt sind. Weitere Flugzeugsystem-Module können beispielsweise ein Flight Management System oder ein Wartungssystem sein.

Weiterhin weist das Flugzeug F ein Hochauftriebssystem HAS mit am Flugzeug jeweils vorhandenen Vorflügeln 13a, 13b und/oder Hinterkantenklappen 14a, 14b auf, die an den Tragflügeln jeweils mittels eines Verstellmechanismus 100 bzw. 200 bewegbar angekoppelt sind und dabei jeweils von einer Antriebsvorrichtung 110 bzw. 210 angetrieben werden. In dem in der Figur 1 dargestellten Ausführungsbeispiel werden die Antriebsvorrichtungen 110, 210 von einer Ansteuerungsvorrichtung 320 angetrieben. Zur Verstellung der Vorflügel 13a, 13b und/oder Hinterkantenklappen 14a, 14b ist im Cockpit des Flugzeugs F eine Eingabevorrichtung 55 zur Eingabe von Soll-Kommandos zur Verstellung der Hochauftriebskörper 13a, 13b, 14a, 14b angeordnet. Die Eingabevorrichtung 55 ist erfindungsgemäß funktional über einen digitalen Datenbus DB an die Ansteuerungsvorrichtung 320 verbunden.

In der Figur 2 ist ein Ausführungsbeispiel eines Hochauftriebssystems mit einem Vorderkanten-Auftriebssystem HAS1 und mit einem Hinterkanten-Auftriebssystem HAS2 dargestellt, das im Folgenden beschrieben wird:
Das in der Figur 2 dargestellte Vorderkanten-Auftriebssystem HAS1 weist auf:
   ▪ vier Vorderkanten-Auftriebskörper A1, A2, A3, A4 bzw. B1, B2, B3, B4 je Tragflügel (in der Darstellung der Figur 1 nicht gezeigt), von denen die Vorderkanten-Auftriebskörper A1, A2, A3, A4 an einem ersten Tragflügel 10a und die Vorderkanten-Auftriebskörper B1, B2, B3, B4 an einem zweiten Tragflügel 10b jeweils gegenüber diesem verstellbar angeordnet sind;
   ▪ ein mechanisch mit den Vorderkanten-Auftriebskörpern gekoppelter Verstellmechanismus 100 zur Verstellung derselben;
   ▪ eine mit dem Verstellmechanismus 100 gekoppelte Vorderkantenauftriebssystem-Antriebsvorrichtung 110 zur Betätigung des Verstellmechanismus 100 aufgrund von empfangenen Verstell-Kommandos;
   ▪ eine Vorderkantenauftriebssystem-Ansteuerüngsvorrichtung 120, die eine Ansteuerungsfunktion enthält, die aufgrund von Eingaben und insbesondere von Soll-Kommandos Verstell-Kommandos zur Verstellung der Vorderkanten-Auftriebskörper erzeugt und an die Vorderkantenauftriebssystem-Antriebsvorrichtung 110 zur Betätigung des Verstellmechanismus 100 übermittelt. Bei dem erfindungsgemäßen Hochauftriebssystem HAS können generell auch weniger oder mehr als vier Vorderkanten-Auftriebskörper pro Tragflügel vorhanden sein.

In der Figur 2 sind die Vorderkanten-Auftriebskörper A1, A2, A3, A4 des in der Flugzeug-Längsrichtung gesehen linken Tragflügels 10a auch einheitlich mit dem Bezugszeichen A und die Vorderkanten-Auftriebskörper B1, B2, B3, B4 des rechten Tragflügels 10b auch einheitlich mit dem Bezugszeichen B versehen.

Die Ansteuerungsvorrichtung 120 des Vorderkantenauftriebssystems HAS1 kann zur Erhöhung der Ausfallsicherheit mehrfach redundant ausgeführt sein. Zu diesem Zweck können, wie es in den Figuren 2 und zwei in bestimmter Hinsicht oder vollständig identische Exemplare 121, 122 einer Ansteuerungsvorrichtung 120 vorgesehen sein, die über eine Datenverbindung miteinander zur gegenseitigen Überwachung und optional Rekonfiguration der Ansteuerungsvorrichtung 120 als Ganzes verbunden sind. Erfindungsgemäß ist generell die Ansteuerungsvorrichtung 120 des Vorderkantenauftriebssystems HAS1 im Nutzlastbereich des Flugzeugrumpfs F3 und in einem Bereich L3 eingebaut ist, der sich in Längsrichtung X gesehen erstreckt von einer Stelle, die von der vorderen Seite F4-1 des Flügelkastens F4 aus gesehen einen Abstand von einem Drittel der sich von dort bis zur Flugzeugspitze F1 erstreckenden Rumpflänge L1 in Richtung zur vorderen Spitze F1 des Flugzeugs F hat, bis zu einer Stelle, die von der hinteren Seite F4-2 des Flügelkastens F4 aus gesehen einen Abstand von einem Drittel der sich von dort bis zum Rumpfende F2 am Heck des Flugzeugs F erstreckenden Rumpflänge L2 in Richtung zum Rumpfende F2 am Heck des Flugzeugs F hat. Der sich dadurch in der Längsrichtung X ergebende Einbaubereich ist in der Figur 1 mit der Längenbezeichnung L3 eingetragen.

Nach der Erfindung ist die Ansteuerungsvorrichtung 120 des Vorderkanten-Auftriebssystems HAS1 im Frachtraum des Flugzeugrumpfs F3 eingebaut, der sich von der vorderen Seite F4-1 des Flügelkastens F4 bis zu einer Stelle erstreckt, die von der vorderen Seite F4-1 des Flügelkastens F4 aus einen Abstand von einem Drittel der sich von dort bis zur Flugzeugspitze F1 erstreckenden Rumpflänge L1 in Richtung zur vorderen Spitze F1 des Flugzeugs F hat. Dieser Abstand ist in der Figur 1 mit "(L1 )/3" bezeichnet.

Unter vorderer oder hinterer Seite F4-1 bzw. F4-2 des Flügelkastens F4 wird in diesem Zusammenhang die in der Flugzeug-Längsrichtung X gesehen vordere Seite des am weitesten vorne gelegenen und sich quer zum Rumpf F3, also entlang der Y-Richtung erstreckenden Querträgers, verstanden. Unter Querträger wiederum wird in diesem Zusammenhang ein tragendes Bauteil des Flügelkastens verstanden.

Das in der Figur 2 dargestellte Hinterkanten-Auftriebssystem HAS2 weist auf:
▪ zwei Hinterkanten-Auftriebskörper oder Landeklappen je Tragflügel (in der Darstellung der Figur 1 nicht gezeigt), und dabei eine innere Landeklappe A1 und eine äußere Landeklappe A2, die jeweils an einem ersten Tragflügel 10a gegenüber diesem verstellbar angeordnet sind, und eine innere Landeklappe B1 und eine äußere Landeklappe B2, die jeweils an einem zweiten Tragflügel 10b gegenüber diesem verstellbar angeordnet sind;
▪ ein mechanisch mit den Hinterkanten-Auftriebskörpern gekoppelter Verstellmechanismus 200 zur Verstellung derselben;
▪ eine mit dem Verstellmechanismus 200 gekoppelte Hinterkantenauftriebssystem-Antriebsvorrichtung 210 zur Betätigung des Verstellmechanismus 200 aufgrund von empfangenen Verstell-Kommandos;
▪ eine Hinterkantenauftriebssystem-Ansteuerungsvorrichtung 220, die eine Ansteuerungsfunktion enthält, die aufgrund von Eingaben und insbesondere von Soll-Kommandos Verstell-Kommandos zur Verstellung der Hinterkanten-Auftriebskörper A1, A2, B1, B2 erzeugt und an die Hinterkantenauftriebssystem-Antriebsvorrichtung 210 zur Betätigung des Verstellmechanismus 200 übermittelt.

Bei dem erfindungsgemäßen Hochauftriebssystem können generell auch nur eine oder mehr als zwei Hinterkanten-Auftriebskörper oder Landeklappen pro Tragflügel vorhanden sein.

In der Figur 2 sind die Hinterkanten-Auftriebskörper C1, C2 des linken Tragflügels 10a auch einheitlich mit dem Bezugszeichen C und die Hinterkanten-Auftriebskörper D1, D2 des rechten Tragflügels 10b auch einheitlich mit dem Bezugszeichen D versehen.

Die Ansteuerungsvorrichtung 220 des Hinterkantenauftriebssystems HAS2 ist zur Erhöhung der Ausfallsicherheit mehrfach redundant ausgeführt sein. Zu diesem Zweck können, wie es in den Figuren 2 und zwei in bestimmter Hinsicht oder vollständig identische Exemplare 221, 222 einer Ansteuerungsvorrichtung 220 vorgesehen sein, die über eine Datenverbindung miteinander zur gegenseitigen Überwachung und optional Rekonfiguration der Ansteuerungsvorrichtung 220 als Ganzes verbunden sind. Erfindungsgemäß ist generell die Ansteuerungsvorrichtung 220 des Hinterkantenauftriebssystems HAS2 im Nutzlastbereich des Flugzeugrumpfs F3 und in einem Bereich L3 eingebaut ist, der sich in Längsrichtung X gesehen erstreckt von einer Stelle, die von der vorderen Seite F4-1 des Flügelkastens F4 aus gesehen einen Abstand von einem Drittel der sich von dort bis zur Flugzeugspitze F1 erstreckenden Rumpflänge L1 in Richtung zur vorderen Spitze F1 des Flugzeugs F hat, bis zu einer Stelle, die von der hinteren Seite F4-2 des Flügelkastens F4 aus gesehen einen Abstand von einem Drittel der sich von dort bis zum Rumpfende F2 am Heck des Flugzeugs F erstreckenden Rumpflänge L2 in Richtung zum Rumpfende F2 am Heck des Flugzeugs 1 hat. Der sich dadurch in der Längsrichtung X ergebende Einbaubereich ist in der Figur 1 mit der Längenbezeichnung L3 eingetragen..

Nach einem speziellen Ausführungsbeispiel der Erfindung ist die Ansteuerungsvorrichtung 220 des Hinterkanten-Auftriebssystems HAS2 im Nutzlastbereich und in einem Bereich des Flugzeugrumpfs F3 eingebaut, der sich von der hinteren Seite F4-2 des Flügelkastens F4 bis zu einer Stelle erstreckt, die von der hinteren Seite F4-2 des Flügelkastens F4 aus einen Abstand von einem Drittel der sich von dort bis zum Rumpfende F2 am Heck des Flugzeugs F erstreckenden Rumpflänge L2 in Richtung zum Rumpfende F2 am Heck des Flugzeugs hat. Dieser Abstand ist in der Figur 1 mit "(L2)/3" bezeichnet.

Das Hochauftriebsystem HAS wird betätigt und kontrolliert über die Piloten-Schnittstelle, die insbesondere die Eingabevorrichtung 55 zur Eingabe von Soll-Kommandos zur Verstellung der Hochauftriebskörper, wie z.B. einen Betätigungshebel, aufweist. Erfindungsgemäße ist die Eingabevorrichtung über eine digitale Datenverbindung mit der Ansteuerungsvorrichtung zur Übermittlung von Soll-Kommandos zur Verstellung der Hochauftriebskörper 14a, 14b verbunden.

Bei dem in der Figur 2 dargestellten Ausführungsbeispiel ist der Datenbus des Flugzeugssystems mit dem Bezugszeichen DB dargestellt. Die Eingabevorrichtung 55 weist Stellungssensoren auf, die die Stellung der Eingabevorrichtung 55 erfassen. Weiterhin weist die Eingabevorrichtung 55 einen Analog-Digital-Wandler auf, der die von der Eingabevorrichtung 55 erfassten Signale in digitale Daten wandelt und über eine entsprechende Schnittstelle auf den Datenbus DB überträgt.

An den Datenbus DB sind die Ansteuerungsvorrichtungen 120, 220 des Vorderkanten-Auftriebssystem HAS1 bzw. des Hinterkanten-Auftriebssystems HAS2 angeschlossen, so dass dadurch die Betätigungsstellungen der Eingabevorrichtung 55, die von den entsprechenden Stellungssensoren ermittelt und über den Analog-Digital-Wandler auf den Datenbus DB übertragen worden sind, entsprechend des Datenprotokolls des Datenbusses DB an die Ansteuerungsvorrichtung 120 des Vorderkanten-Auftriebssystem HAS1 und die Ansteuerungsvorrichtung 220 des Hinterkanten-Auftriebssystems HAS2 übermittelt werden.

Alternativ zu dem in der Figur 2 dargestellten Ausführungsbeispiel kann nach der Erfindung vorgesehen sein, dass das Hochauftriebssystem HAS nur ein Vorderkanten-Auftriebssystem HAS1 und kein Hinterkanten-Auftriebssystem HAS2 oder nur ein Hinterkanten-Auftriebssystem HAS2 und kein Vorderkanten-Auftriebssystem HAS1 aufweist, wie dies in der Figur 3 bzw. 4 dargestellt ist. In diesen Fällen ist die Eingabevorrichtung 55 mit der Ansteuerungsvorrichtung 120 des Vorderkanten-Auftriebssystem HAS1 bzw. mit der Ansteuerungsvorrichtung 220 des Hinterkanten-Auftriebssystems HAS2 funktional verbunden, wie dies in der Figur 3 bzw. 4 dargestellt ist.

Weiterhin kann nach der Erfindung alternativ zu dem in der Figur 2 dargestellten Ausführungsbeispiel vorgesehen sein, dass die Ansteuerungsvorrichtung 120 des Vorderkanten-Auftriebssystems HAS1 und die Ansteuerungsvorrichtung 220 des Hinterkanten-Auftriebssystems HAS2 in eine Ansteuerungsvorrichtung zusammen in einer Ansteuerungs-Einheit oder Ansteuerungscomputer-Anordnung 320 integriert sind, wie es in der Figur 1 dargestellt ist. Diese kann ebenfalls zur Erhöhung der Ausfallsicherheit mehrfach redundant und sich gegenseitig überwachend ausgeführt sein.

Die Figur 4 ist ergänzend zu der Darstellung der Figur 2, in der mechanische Komponenten oder Bestandteile eines Ausführungsbeispiels eines Hochauftriebssystems nach der Erfindung dargestellt ist, eine schematische Darstellung eines Ausführungsbeispiels des erfindungsgemäßen Flugzeugs mit einem Hinterkanten-Auftriebssystem HAS1 bzw. einem Vorderkanten-Auftriebssystem HAS2. In diesen Darstellungen sind Funktionsmodule des jeweiligen Hochauftriebssystems, Funktionsmodule des Flugzeugs-Systems und zugehörige von Signalübertragungsleitungen dargestellte, wobei einzelne Funktionsmodule und Signalübertragungsleitungen zur Erreichung einer übersichtlichen Darstellung außerhalb der Flugzeug-Umrandung eingetragen sind. In den Figuren 3 und 4 sind Bezugszeichen von Komponenten oder Modulen oder Bestandteilen des jeweiligen Hochauftriebssystems mit den in den Figuren 1 und 2 verwendeten Bezugszeichen versehen, soweit es sich um Komponenten oder Module oder Bestandteile gleicher oder ähnlicher Funktion handelt.

Ein Ausführungsbeispiel des Vorderkanten-Auftriebssystems HAS1 und des Hinterkanten-Auftriebssystems HAS2, das in der Figur 2 beispielartig dargestellt ist, wird mit ihren weiteren Bestandteilen im Folgenden beschrieben, wobei für Bestandteile oder Komponenten mit generell gleicher Funktion mit denselben Bezugszeichen verwendet werden:
Die Antriebsvorrichtungen 110 bzw. 210 können jeweils zwei Antriebsmotoren M1, M2 zur Betätigung der Verstellmechaniken 100 bzw. 200, sowie diesen zugeordnete Brems-Vorrichtungen B1, B2 zur Arretierung des jeweiligen Hochauftriebssystems HAS, HAS1, HAS2 aufweisen. Weiterhin können die Antriebsvorrichtungen 110 bzw. 210 ein Differential aufweisen. Das Differential ist mit den Ausgangsseiten des Hydraulikmotors M1 und des Elektromotors M2 derart gekoppelt, dass die von dem Hydraulikmotor H und dem Elektromotor jeweils bereitgestellten Leistungen summiert werden und an Antriebs-Drehwellen 111, 112 bzw. 211, 212 übertragen werden. Die Brems-Vorrichtungen B1, B2 können durch ein Kommandosignal der jeweils zugeordneten Ansteuerungsvorrichtung 110 bzw. 210 betätigt werden kann.

An die Antriebsvorrichtungen 110, 210 sind jeweils ein Verstellmechanismus 100 bzw. 200 zur Verstellung der jeweils zugeordneten Auftriebskörper A, B bzw. C, D und im gezeigten Ausführungsbeispiel insgesamt zwei Antriebs-Drehwellen 111, 112 bzw. 211, 212 jeweils zur Betätigung der zumindest einen Klappe des Vorderkanten-Auftriebssystems bzw. des Hinterkanten-Auftriebssystems je Tragflügel angekoppelt. Die beiden Antriebs-Drehwellen 111, 112 bzw. 211, 212 sind an die jeweilige Antriebsvorrichtung 110 bzw. 210 gekoppelt und werden durch diese miteinander synchronisiert. Aufgrund entsprechender Steuerkommandos versetzt die Antriebsvorrichtung 110 bzw. 210 die Antriebs-Drehwellen 111, 112 bzw. 211, 212 in Drehung zur Ausübung von Stellbewegungen der mit diesen gekoppelten Verstell-Vorrichtungen der jeweiligen Klappe. In einem der Antriebsvorrichtung 110 bzw. 210 nahe gelegenen Wellenabschnitt der Antriebs-Drehwellen 111, 112 bzw. 211, 212 kann ein Drehmoment-Begrenzer T integriert sein.

Bei dem in der Figur 2 dargestellten Hochauftriebssystem sind an jedem Auftriebskörper A, A1, A2, A3, A4 sowie B, B1, B2, B3, B4 des Vorderkanten-Auftriebssystems HAS1 jeweils zwei Verstellvorrichtungen VA bzw. VB angeordnet. Weiterhin sind an jedem Auftriebskörper C1, C2 sowie D1, D2 des Hinterkanten-Auftriebssystems HAS2 jeweils zwei Verstellvorrichtungen VC bzw. VD angeordnet und zwar im Einzelnen z.B. an den inneren Auftriebskörpern C1 und D1 die Verstell-Vorrichtungen VC und an den äußeren Auftriebskörpern C2 und D2 die Verstell-Vorrichtungen VD.

Im Folgenden werden die Verstell-Vorrichtungen an Hand eines Ausführungsbeispiels derselben beschrieben, wobei dabei die Bestandteile jeder Verstell-Vorrichtungen mit gleicher Funktion ausgestattet sind:
Jede der Verstell-Vorrichtungen VA, VB bzw. VC, VD weist ein Übersetzungsgetriebe 150 bzw. 250 und eine Verstell-Kinematik 121 bzw. 221 auf. Das Übersetzungsgetriebe 120 bzw. 220 ist mechanisch an die jeweiligen Antriebs-Drehwellen 111, 112 bzw. 211, 212 angekoppelt und setzt eine Rotationsbewegung der jeweiligen Antriebs-Drehwellen 111, 112 bzw. 211, 212 in eine Verstellbewegung des Klappenbereichs um, der mit der jeweiligen Verstell-Vorrichtungen gekoppelt ist. Nach einem Ausführungsbeispiele der Erfindung kann der Verstellmechanismus 100 und/oder 200 zumindest einen Positionssensor aufweisen, der die Verstellposition der Verstellmechanismen 100 und/oder 200 und somit die aktuelle Position der jeweiligen Klappe ermittelt und diesen Positionswert über eine nicht dargestellte Leitung an die Steuerungs- und Überwachungsvorrichtung 5 zur Kontrolle des Zustands des jeweiligen Hochauftriebssystems sendet.

Beispielsweise kann an den Enden der Drehwellen-Antriebsstränge 111, 112 bzw. 211, 212 ein Asymmetrie-Sensor 153 bzw. 253 angeordnet sein, der ebenfalls über eine Signalleitung funktional mit der Ansteuerungsvorrichtung 120 bzw. 220 verbunden ist und über diese Leitung einen aktuellen Wert an die Ansteuerungsvorrichtung 110 bzw. 210 sendet, der aussagt, ob die Enden der Drehwellen-Antriebsstränge 111, 112 bzw. 211, 212 innerhalb eines vorgegebenen Bereichs rotiert werden oder ob eine asymmetrische Drehstellung der Antriebs-Drehwellen 111, 112 bzw. 211, 212 gegeben ist.

Sofern an einem Tragflügel mindestens zwei Hochauftriebskörper des Vorderkanten-Auftriebssystems HAS1 bzw. des Hinterkanten-Auftriebssystems HAS2 vorgesehen sind, können zwischen jeweils benachbarten Auftriebskörpern Verbindungsstreben 240 vorgesehen sein (nur im Hinterkanten-Auftriebssystem der Figuren 2 und 3 eingetragen), an denen ein Verbindungsstreben-Sensor 241 angeordnet ist. Der Verbindungsstreben-Sensor 241 ist funktional verbunden mit der jeweiligen Ansteuerungsvorrichtung 120 bzw. 220 und kann insbesondere zur Messung einer Endlage ausgeführt sein, wobei die jeweilige Ansteuerungsvorrichtung 120 bzw. 220 bei Überschreiten eines vorbestimmten Grenzwertes dem Auftriebskörper-Verstellmechanismus 100, 200 auf derjenigen Tragflügel-Seite einen Fehler zuordnet, auf der die Grenzwert-Überschreitung festgestellt wurde.

Weiterhin sind an einer Stelle der Antriebs-Drehwellen 111, 112 bzw. 211, 212, der in einem äußeren Bereich des jeweiligen Flügels gelegen ist, jeweils eine Flügelendbereichs-Bremse WTB angeordnet, die bei Betätigung den jeweiligen Antriebsstrang 111, 112 bzw. 211, 212 blockieren kann. Jede der Flügelendbereichs-Bremsen WTB ist über eine ebenfalls nicht dargestellte Leitung funktional mit der Ansteuerungsvorrichtung 120 bzw. 220 verbunden und kann über diese Leitung von der Ansteuerungsvorrichtung 120 bzw. 220 angesteuert und betätigt werden. Im Betrieb ist der normale Ausgangszustand der Flügelendbereichs-Bremse WTB ein Nicht-Betätigungszustand, bei dem diese auf die Rotation der Antriebs-Drehwellen 111, 112 bzw. 211, 212 nicht eingreifen. Bei einem entsprechenden Steuerungssignal von der Ansteuerungsvorrichtung 120 bzw. 220 können die Flügelendbereichs-Bremsen WTB betätigt werden, um die jeweils zugeordnete Antriebs-Drehwelle 111, 112 bzw. 211, 212 zu arretieren.

Beide Brems-Vorrichtungen B1, B2 der jeweiligen Antriebsvorrichtung 110, 210 sind funktional mit der jeweiligen Ansteuerungsvorrichtung 120 bzw. 220 verbunden, die bei vorbestimmten Bedingungen die Brems-Vorrichtungen B1, B2 betätigen und damit die Drehwellen-Antriebsstränge 111, 112 bzw. 211, 212 arretieren kann. Bei einem Ausführungsbeispiel ist vorgesehen, dass in dem Fall, das einer der beiden Antriebsmotoren, der Hydraulikmotor M1 oder der Elektrikantrieb M2, abgeschaltet wird, die Ansteuerungsvorrichtung 120 bzw. 220 aufgrund des Differentials, das derart gestaltet ist, dass die von dem Hydraulikmotor M1 und dem Elektromotor M2 jeweils bereitgestellten Leistungen summiert werden, eine um den Betrag der abgeschaltete Antriebsmotors reduzierte Leistung abgibt.

Mechanische Fehler bei den Auftriebskörper-Betätigungsmechanismen oder Auftriebskörper-Verstellmechanismen 100, 200 wie z.B. ein Klemmen eines Bestandteils eines Klappen-Betätigungsmechanismus oder der Drehwellen-Antriebsstränge 111, 112 bzw. 211, 212 oder ein Bruch einer Antriebs-Drehwelle eines Drehwellen-Antriebsstranges 111, 112 bzw. 211, 212 kann zu unerwünschtem Verhalten der Vorrichtung wie z. B. einer asymmetrischen Betätigung der Klappenelemente führen, was die Ansteuerungsvorrichtung 120 bzw. 220 mittels der von den Asymmetrie-Sensoren 153 bzw. 253 übermittelten Signale feststellt. Daraufhin sendet die Ansteuerungsvorrichtung 120 bzw. 220 ein Abschaltsignal an die Flügelendbereichs-Bremse WTB, um die Flügelendbereichs-Bremsen WTB zu betätigen und die Antriebs-Drehwellen 111, 112 bzw. 211, 212 zu arretieren.

Bei einer nicht zulässigen Abweichung der von der Ansteuerungsvorrichtung 120 bzw. 220 ermittelten Soll-Positionen von den mittels der Positionssensoren erfassten Ist-Positionen sendet die Ansteuerungsvorrichtung 120 bzw. 220 ein Betätigungs-Signal an die Flügelendbereichs-Bremse WTB sowie an die Brems-Vorrichtungen B1, B2 zur Arretierung beider Wellenstränge 111, 112 bzw. 211, 212.

Die Sensoren, die zur Überwachung des jeweiligen Vorderkanten-Auftriebssystems HAS1 oder Hinterkanten-Auftriebssystems HAS2 vorgesehen sind, also der jeweilige Positionssensor, der jeweilige Asymmetrie-Sensor 153 bzw. 253 und gegebenenfalls der jeweilige Verbindungsstreben-Sensor 241, sind zur Zuführung von deren Sensorsignalen an die jeweils zugeordnete Ansteuerungsvorrichtung 120 bzw. 220 über Analogleitungen AL, d.h. elektrische Leitungen, die Analogsignale übertragen, funktional mit der jeweiligen Ansteuerungsvorrichtung 120, 220 verbunden. Ebenso sind die von der jeweils zugeordneten Ansteuerungsvorrichtung 120 bzw. 220 anzusteuernden Komponenten, wie insbesondere die Flügelendbereichs-Bremsen WTB oder der Motor M1 oder der Motor M2 zur Kommandierung derselben mit der jeweils zugeordnete Ansteuerungsvorrichtung 120 bzw. 220 über Analogleitungen AL funktional verbunden (Figuren 3 und 4).

Die beschriebene Übertragung von Daten über den Datenbus DB kann insbesondere über eine digitale Datensammel- und Verteilerstelle erfolgen.

## Patentansprüche

1. Flugzeug (F) mit einem Hochauftriebssystem, aufweisend:
▪ einen Flugsteuerungs-Computer (51),
▪ zumindest einen Hochauftriebskörper (13a, 13b; 14a, 14b; A, B; C, D), der an jeweils einem Tragflügel des Flugzeugs (F) gegenüber diesem verstellbar angeordnet ist,
▪ eine mit den Hochauftriebskörpern (13a, 13b; 14a, 14b; A, B; C, D) gekoppelte Antriebsvorrichtung (110, 210), die derart ausgeführt ist, dass diese die Hochauftriebskörper (13a, 13b; 14a, 14b; A, B; C, D) aufgrund von Ansteuerungskommandos zwischen einer eingefahrenen Stellung und einer ausgefahrenen Stellung verstellt,
▪ eine über eine analoge Datenverbindung mit der Antriebsvorrichtung verbundene mehrfach redundant ausgeführte Ansteuerungsvorrichtung (120, 220) mit einer Ansteuerungsfunktion zur Erzeugung von Ansteuerungskommandos zur Einstellung des Verstellzustands der Hochauftriebskörper (13a, 13b; 14a, 14b; A, B; C, D) sowie zur Erzeugung von Überwachungs- und Feststellkommandos zur Arretierung der Hochauftriebskörper (13a, 13b; 14a, 14b; A, B; C, D) im Systemfehlerfall, wobei die Ansteuerungsvorrichtung (120, 220) über eine digitale Datenverbindung mit dem Flugsteuerungs-Computer (51) zum Empfang von flugzustands-bezogenen Daten verbunden ist,
▪ eine im Cockpit des Flugzeugs angeordnete Eingabevorrichtung (55) zur Eingabe von Soll-Kommandos zur Verstellung der Hochauftriebskörper (13a, 13b; 14a, 14b; A, B; C, D),
▪ Sensoren zum Erfassen eines Verstellzustands der Hochauftriebskörper (13a, 13b; 14a, 14b; A, B; C, D), die über analoge Signalleitungen mit der Ansteuerungsvorrichtung (120, 220) verbunden sind, und wobei die Eingabevorrichtung über eine digitale Datenverbindung (DB) mit der Ansteuerungsvorrichtung (120, 220) zur Übermittlung von Soll-Kommandos zur Verstellung der Hochauftriebskörper (13a, 13b; 14a, 14b; A, B; C, D) verbunden ist und
**dadurch gekennzeichnet**,
▪ dass die Ansteuerungsvorrichtung (120, 220) des Hochauftriebssystems (HAS) im Frachtraum des Flugzeugrumpfs (F3) und in einem Bereich (L3) eingebaut ist, der sich in Längsrichtung (X) des Flugzeugrumpfs (F3) gesehen erstreckt von einer Stelle, die von der vorderen Seite (F4-1) des Flügelkastens (F4) aus gesehen einen Abstand ((L1)/3) von einem Drittel der sich von dort bis zur Flugzeugspitze (F1) erstreckenden Rumpflänge (L1) hat, bis zu einer Stelle, die von der hinteren Seite (F4-2) des Flügelkastens (F4) aus gesehen einen Abstand ((L2)/3) von einem Drittel der sich von dort bis zum Rumpfende (F2) am Heck des Flugzeugs (F) erstreckenden Rumpflänge (L2) hat.

2. Flugzeug nach dem Anspruch 1, **dadurch gekennzeichnet, dass** das Hochauftriebssystem ein Vorderkanten-Auftriebssystem (HAS1) mit verstellbaren Vorderkanten-Auftriebskörpern und einer Ansteuerungsvorrichtung (120) ist, wobei die Ansteuerungsvorrichtung (120) des Vorderkanten-Auftriebssystems (HAS1) zu deren Verstellung funktional mit diesen verbunden ist.

3. Flugzeug nach dem Anspruch 2, **dadurch gekennzeichnet, dass** die Ansteuerungsvorrichtung (120) des Vorderkanten-Auftriebssystems (HAS1) im Nutzlastbereich des Flugzeugrumpfs und dabei in einem Bereich eingebaut ist, der sich von der vorderen Seite (F4-1) des Flügelkastens (F4) bis zu einer Stelle erstreckt, die von der vorderen Seite (F4-1) des Flügelkastens (F4) einen Abstand ((L1)/3) von einem Drittel der sich von dort bis zur Flugzeugspitze (F1) des Flugzeugs (F) erstreckenden Rumpflänge (L1) hat.

4. Flugzeug nach einem der voranstehenden Ansprüche, **dadurch gekennzeichnet, dass** das Hochauftriebssystem ein Hinterkanten-Auftriebssystem (HAS2) mit verstellbaren Hinterkanten-Auftriebskörpern und einer Ansteuerungsvorrichtung (220) ist, wobei die Ansteuerungsvorrichtung (210) des Hinterkanten-Auftriebssystems (HAS2) zu deren Verstellung funktional mit diesen verbunden ist.

5. Flugzeug nach dem Anspruch 4, **dadurch gekennzeichnet, dass** die Ansteuerungsvorrichtung (220) des Hinterkanten-Auftriebssystems (HAS2) im Nutzlastbereich des Flugzeugrumpfs (F3) und dabei in einem Bereich eingebaut ist, der sich von der hinteren Seite (F4-2) des Flügelkastens (F4) bis zu einer Stelle erstreckt, die von der hinteren Seite (F4-2) des Flügelkastens (F4) aus einen Abstand ((L2)/3) von einem Drittel der sich von dort bis zum Ende (F2) des Rumpfs am Heck des Flugzeugs (F) erstreckenden Rumpflänge (L1) hat.

6. Flugzeug nach einem der voranstehenden Ansprüche, **dadurch gekennzeichnet, dass** die zumindest eine Ansteuerungsvorrichtung (120, 220) jeweils aus Computern und Hardware-Schnittstellen gebildet sind, die in ihrer Hardware identisch ausgeführt sind, um eine Austauschbarkeit von Computern mit Hardware-Schnittstellen zwischen Ansteuerungsvorrichtungen (120, 220) und/oder innerhalb von Ansteuerungsvorrichtungen (120, 220) zu gewährleisten.

7. Flugzeug nach einem der voranstehenden Ansprüche, **dadurch gekennzeichnet, dass** das Flugzeug (F) ein Flugzeug mit einem Heckantrieb ist.

## Claims

1. An aircraft (F) having a high lift system, comprising:
• a flight control computer (51),
• at least one high lift body (13a, 13b; 14a, 14b; A, B; C, D), disposed on each respective wing of the aircraft (F) so as to be adjustable relative to the latter,
• a drive device (110, 210), coupled with the high lift bodies (13a, 13b; 14a, 14b; A, B; C, D), which is configured such that it adjusts the high lift bodies (13a, 13b; 14a, 14b; A, B; C, D) between a retracted position and an extended position on the basis of activation commands,
• a multiply redundant activation device (120, 220) connected to the drive device via an analog data connection and including an activation function that generates activation commands for setting an adjustment state of the high lift bodies and that generates monitoring and locking commands for locking the high lift bodies (13a, 13b; 14a, 14b; A, B; C, D) in the event of a system failure, wherein the activation device (120, 220) is connected via a digital data connection to the flight control computer (51) for receiving flight state-related data,
• an input device (55) arranged in the cockpit of the aircraft, the input device receiving input of target commands for adjusting the high lift bodies (13a, 13b; 14a, 14b; A, B; C, D),
• sensors configured to detect an adjustment state of the high lift bodies (13a, 13b; 14a, 14b; A, B; C, D) which are connected via analog signal lines to the activation device (120, 220),
• and wherein the input device is connected via a digital data connection (DB) to the activation device (120, 220) for the transmission of target commands for adjusting the high lift bodies (13a, 13b; 14a, 14b; A, B; C, D),
**characterized in that**
• the activation device (120, 220) of the high lift system (HAS) is installed in a cargo compartment of the aircraft's fuselage (F3) and in an area (L3) extending, when viewed in a longitudinal direction (X) of the aircraft's fuselage (F3), from a location which is spaced apart from a front side (F4-1) of a wingbox (F4) by a distance ((L1)/3) of one third of a fuselage length (L1) extending from there to a tip of the aircraft (F1), as far as a location which is spaced apart from a rear side (F4-2) of the wingbox (F4) by a distance ((L2)/3) of one third of a fuselage length (L2) extending from there to a fuselage end (F2) at a tail end of the aircraft (F).

2. The aircraft according to claim 1, **characterized in that** the high lift system is a leading edge lift system (HAS1)having adjustable leading edge lift bodies and an activation device (120), wherein the activation device (120) of the leading edge lift system (HAS1) is functionally connected to the latter for adjusting them.

3. The aircraft according to claim 2, **characterized in that** the activation device (120) of the leading edge lift system (HAS1) is installed in the payload area of the aircraft's fuselage and in an area extending from the front side (F4-1) of the wingbox (F4) to a location which is spaced apart from the front side (F4-1) of the wingbox (F4) by a distance ((L1)/3) of one third of the fuselage length (L1) extending from there to the tip (F1) of the aircraft (F).

4. The aircraft according to one of the preceding claims, **characterized in that** the high lift system is a trailing edge lift system (HAS2) having adjustable trailing edge lift bodies and an activation device (220), wherein the activation device (210) of the trailing edge lift system (HAS2) is functionally connected to the latter for adjusting them.

5. The aircraft according to claim 4, **characterized in that** the activation device (220) of the trailing edge lift system (HAS2) is installed in the payload area of the aircraft's fuselage (F3) and in an area extending from the rear side (F4-2) of the wingbox (F4) to a location which is spaced apart from the rear side (F4-2) of the wingbox (F4) by a distance ((L2)/3) of one third of the fuselage length (L1) extending from there to the end (F2) of the fuselage at the tail end of the aircraft (F).

6. The aircraft according to one of the preceding claims, **characterized in that** the at least one activation device(s) (120, 220) are formed of respective computers and hardware interfaces which are implemented in their hardware so as to be identical, in order to ensure an exchangeability of computers with hardware interfaces between activation devices (120, 220) and/or within activation devices (120, 220).

7. The aircraft according to one of the preceding claims, **characterized in that** the aircraft (F) is a rear-drive aircraft.

## Revendications

1. Aéronef (F) comprenant un système hypersustentateur, présentant :
▪ un ordinateur (51) de commande de vol,
▪ au moins un corps hypersustentateur (13a, 13b, 14a, 14b, A, B; C, D), qui est monté mobile sur une aile respective de l'aéronef (F) par rapport à celle-ci,
▪ un dispositif d'entraînement (110, 210) accouplé aux corps hypersustentateurs (13a, 13b, 14a, 14b, A, B, C, D), qui est conçu de manière à qu'il déplace les corps hypersustentateurs (13a, 13b, 14a, 14b, A, B, C, D) entre une position déployée et une position rétractée en fonction d'instructions de commande,
▪ un dispositif de commande (120, 220) à redondance multiple relié au dispositif d'entraînement par l'intermédiaire d'une liaison de données analogique ayant une fonction de commande destinée à générer des instructions de commande pour régler l'état de déplacement des corps hypersustentateurs (13a, 13b, 14a, 14b, A, B; C, D) et pour générer des instructions de détermination et de surveillance pour bloquer les corps hypersustentateurs (13a, 13b, 14a, 14b, A, B, C, D) en cas d'erreur système, le dispositif de commande (120, 220) étant relié par l'intermédiaire d'une liaison de données numérique à l'ordinateur (51) de commande de vol pour recevoir des données relatives à l'état du vol,
▪ un dispositif d'entrée (55) disposé dans le cockpit de l'aéronef destiné à entrer les instructions théoriques destinées à déplacer les corps hypersustentateurs (13a, 13b, 14a, 14b, A, B; C, D),
▪ des capteurs destinés à détecter un état de déplacement des corps hypersustentateurs (13a, 13b, 14a, 14b, A, B, C, D), qui sont reliés au dispositif de commande (120, 220) par l'intermédiaire de lignes de signal analogiques, et le dispositif d'entrée étant relié par l'intermédiaire d'une liaison de données numérique (DB) au dispositif de commande (120, 220) pour la transmission des instructions théoriques destinées à déplacer les corps hypersustentateurs (13a, 13b, 14a, 14b, A, B, C, D) et
**caractérisé en ce que**
▪ le dispositif de commande (120, 220) du système hypersustentateur (HAS) est installé dans la soute du fuselage (F3) et dans une zone (L3) qui, vue dans la direction longitudinale (X) du fuselage (F3), s'étend à partir d'un point qui, vu à partir du côté avant (F4-1) du caisson (F4) d'aile, présente un espace ((L1)/3) d'un tiers de la longueur du fuselage (L1) s'étendant à partir de là jusqu'à la pointe (F1) de l'aéronef, jusqu'à un point, qui vu à partir du côté arrière (F4-2) du caisson (F4) d'aile présente un espace ((L2)/3) d'un tiers de la longueur du fuselage (L2) s'étendant à partir de là jusqu'à l'extrémité de fuselage (F2) au niveau de l'empennage de l'aéronef (F).

2. Aéronef selon la revendication 1, **caractérisé en ce que** le système hypersustentateur est un système de portance (HAS1) de bord d'attaque doté de corps de portance de bord d'attaque mobiles et d'un dispositif de commande (120), le dispositif de commande (120) du système de portance (HAS1) de bord d'attaque étant relié fonctionnellement à celui-ci pour permettre son déplacement.

3. Aéronef selon la revendication 2, **caractérisé en ce que** le dispositif de commande (120) du système de portance (HAS1) de bord d'attaque est installé dans la zone de charge utile du fuselage de l'aéronef et également dans une zone qui s'étend à partir du côté avant (F4-1) du caisson (F4) d'aile jusqu'à un point qui présente à partir du côté avant (F4-1) du caisson (F4) d'aile un espace ((L1)/3) d'un tiers de la longueur de fuselage (L1) s'étendant à partir de là jusqu'à la pointe (F1) de l'aéronef (F).

4. Aéronef selon l'une des revendications précédentes, **caractérisé en ce que** le système hypersustentateur est un système de portance (HAS2) de bord de fuite comprenant des corps de portance de bord de fuite mobiles et un dispositif de commande (220), le dispositif de commande (210) *[sic]* du système de portance (HAS2) de bord de fuite étant relié fonctionnellement à celui-ci pour permettre son déplacement.

5. Aéronef selon la revendication 4, **caractérisé en ce que** le dispositif de commande (220) du système de portance (HAS2) de bord de fuite est installé dans la zone de charge utile du fuselage (F3) de l'aéronef et également dans une zone, qui s'étend à partir du côté arrière (F4-2) du caisson (F4) d'aile jusqu'à un point qui à partir du côté arrière (F4-2) du caisson (F4) d'aile présente un espace ((L2)/3) d'un tiers de la longueur de fuselage (L1) s'étendant à partir de là jusqu'à l'extrémité (F2) du fuselage au niveau de l'empennage de l'aéronef (F).

6. Aéronef selon l'une des revendications précédentes, **caractérisé en ce que** ledit au moins un dispositif de commande (120, 220) est constitué respectivement d'ordinateurs et d'interfaces matériel qui sont conçus de manière identique en termes de leur matériel pour garantir une interchangeabilité d'ordinateurs avec les interfaces matériel entre des dispositifs de commande (120, 220) et/ou à l'intérieur des dispositifs de commande (120, 220).

7. Aéronef selon l'une des revendications précédentes, **caractérisé en ce que** l'aéronef (F) est un aéronef doté d'une propulsion arrière.
